(19) Europäisches Patentamt
European Patent Office
Office européen des brevets

(11) EP 3 971 259 B1

(12) EUROPEAN PATENT SPECIFICATION

(45) Date of publication and mention of the grant of the patent:
**30.08.2023 Bulletin 2023/35**

(21) Application number: **21187110.8**

(22) Date of filing: **22.07.2021**

(51) International Patent Classification (IPC):
***C09K 5/10*** *(2006.01)* ***G06F 1/20*** *(2006.01)*
***H05K 7/20*** *(2006.01)*

(52) Cooperative Patent Classification (CPC):
**C09K 5/10; G06F 1/20;** G06F 2200/201

# (54) NON-WATER COOLANT COMPOSITION AND COOLING SYSTEM

WASSERFREIE KÜHLMITTELZUSAMMENSETZUNG UND KÜHLSYSTEM

COMPOSITION DE REFROIDISSEMENT NON AQUEUSE ET SYSTÈME DE REFROIDISSEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2020 JP 2020156332**

(43) Date of publication of application:
**23.03.2022 Bulletin 2022/12**

(73) Proprietor: **TOYOTA JIDOSHA KABUSHIKI KAISHA**
**Toyota-shi**
**Aichi 471-8571 (JP)**

(72) Inventors:
- **KODAMA, Yasuaki**
  **Toyota-shi, 471-8571 (JP)**
- **WATANABE, Masao**
  **Toyota-shi, 471-8571 (JP)**
- **TOKOZAKURA, Daisuke**
  **Toyota-shi, 471-8571 (JP)**

(74) Representative: **J A Kemp LLP**
**80 Turnmill Street**
**London EC1M 5QU (GB)**

(56) References cited:
**WO-A1-2020/011889**
**CN-A- 107 346 866**
**JP-A- 2020 026 471**
**US-A- 6 148 634**
**US-A1- 2005 127 322**
**US-A1- 2011 132 579**
**US-A1- 2011 232 871**
**US-A1- 2013 168 049**
**US-B2- 7 403 392**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 971 259 B1

## Description

TECHNICAL FIELD

The present disclosure relates to a non-water coolant composition and a cooling system using the non-water coolant composition.

BACKGROUND ART

A vehicle with travel motor, such as a hybrid vehicle and an electric vehicle, includes a power control unit (PCU) for appropriately controlling an electric power. The PCU includes an inverter that drives the motor, a boost converter that controls a voltage, a DC/DC converter that steps down a high voltage, and the like. The inverter or the converter includes a power card as a card-type power module that includes semiconductor devices, and the power card generates heat caused by its switching action. Therefore, the inverter and the converter are apparatuses that possibly generate heat to have a high temperature. A heat generation apparatus in the vehicle with travel motor includes, for example, a battery in addition to the inverter and the converter. Accordingly, the vehicle with travel motor includes a cooling system for cooling the inverter, the converter, the battery, and the like.

For example, JP 2017-017228 A discloses a configuration of a semiconductor apparatus used for an inverter of a drive system in a vehicle with travel motor (for example, an electric vehicle or a hybrid vehicle) (FIG. 1). A semiconductor apparatus 2 of FIG. 1 is a unit where a plurality of power cards 10 and a plurality of coolers 3 are stacked. In FIG. 1, reference numeral 10 is attached to only one power card, and reference numerals to the other power cards are omitted. For showing the whole semiconductor apparatus 2, a case 31, which houses the semiconductor apparatus 2, is illustrated by dotted lines. The one power card 10 is sandwiched between the two coolers 3. An insulating plate 6a is sandwiched between the power card 10 and one of the coolers 3, and an insulating plate 6b is sandwiched between the power card 10 and the other of the coolers 3. Greases are applied between the power card 10 and the insulating plates 6a and 6b. Greases are applied also between the insulating plates 6a and 6b and the coolers 3. For easy understanding, FIG. 1 illustrates the one power card 10 and the insulating plates 6a and 6b extracted from the semiconductor apparatus 2. The power card 10 houses a semiconductor device. The power card 10 is cooled by a refrigerant passing through the cooler 3. The refrigerant is a liquid, typically water. The power cards 10 and the coolers 3 are alternately stacked, and the coolers 3 are positioned at both ends in a stacking direction of the unit. The plurality of coolers 3 are coupled by coupling pipes 5a and 5b. A refrigerant supply pipe 4a and a refrigerant discharge pipe 4b are coupled to the cooler 3 positioned at the one end in the stacking direction of the unit. The refrigerant supplied through the refrigerant supply pipe 4a is distributed to every cooler 3 through the coupling pipe 5a. The refrigerant absorbs the heat from the adjacent power card 10 while passing through each cooler 3. The refrigerant that has passed through each cooler 3 passes through the coupling pipe 5b and is discharged from the refrigerant discharge pipe 4b.

As a coolant, a non-aqueous coolant, such as a mineral oil, an aqueous coolant comprising water (for example, a mixture of ethylene glycol and water), and the like are generally used. For example, JP 2020-026471 A discloses a coolant composition that comprises: (A) polyhydric alcohol; (B) water; (C) cyclohexanol; and (D) nonionic surfactant expressed in a predetermined formula and having an HLB value of 11.0 or more as an aqueous coolant. An aqueous coolant generally has excellent cooling capability.

US2013/168049, US6,148,634, US2005/127322, CN107346866 and US2011/232871 disclose a non-water coolant composition according to the pre-characterising section of claim 1.

WO2020/011889 discloses a composition for lubricating a propulsion system of an electric or hybrid vehicle, comprising at least one base oil and at least one flame retardant of formula (I) RF-L-RH (I), where RF is a perfluorinated or partially fluorinated group, RH is a hydrocarbon group, and L is a linking agent.

SUMMARY

As the configuration of the semiconductor apparatus disclosed in JP 2017-017228 A, generally, the coolant circulates near the heat generation apparatuses, such as the power cards and the batteries, and therefore an excellent insulation property is required for the coolant. Additionally, in a cooling system in which the heat generation apparatus, such as the power card, directly contacts the coolant, both of excellent cooling capability and flame resistance are required for the coolant. Therefore, the coolant is required to have all of the excellent insulation property, cooling capability, and flame resistance. In this respect, although the mixture of ethylene glycol and water, which is generally used, and the aqueous coolant with, for example, the composition described in JP 2020-026471 A generally have advantages of excellent cooling capability (namely, a heat transfer property) and an excellent flame resistance, they have a high conductivity and a poor insulation property. On the other hand, although a non-aqueous coolant, such as a mineral oil, is excellent in insulation property, there is room for improvement in terms of a flame resistance.

Therefore, the present disclosure provides a non-aqueous coolant composition that is excellent in insulation property, cooling capability, and flame resistance.

Exemplary aspects of the embodiment will be described as follows.

(1) A non-water coolant composition comprises at least one halogen-based flame retardant selected from a fluorine-based oil and a chlorinated paraffin, characterised by further comprising at least one base oil selected from a mineral oil and a synthetic oil.

(2) The non-water coolant composition according to (1) in which the halogen-based flame retardant comprises the fluorine-based oil.

(3) The non-water coolant composition according to (1) or (2) in which the fluorine-based oil comprises a chlorotrifluoroethylene low polymer.

(4) The non-water coolant composition according to (1) in which the halogen-based flame retardant comprises the chlorinated paraffin.

(5) The non-water coolant composition according to (4) in which the chlorinated paraffin has 10 to 30 carbon atoms.

(6) The non-water coolant composition according to (1) in which the halogen-based flame retardant has a content of 1 to 80 mass%, and the base oil has a content of 20 to 99 mass%.

(7) The non-water coolant composition according to (1) wherein the halogen-based flame retardant comprises the fluorine-based oil. The halogen-based flame retardant has a content of 1 to 55 mass%. The base oil has a content of 45 to 99 mass%.

(8) The non-water coolant composition according to (1) wherein the halogen-based flame retardant comprises the chlorinated paraffin. The halogen-based flame retardant has a content of 1 to 80 mass%. The base oil has a content of 20 to 99 mass%.

(9) The non-water coolant composition according to any one of (6) to (8) in which a total content of the halogen-based flame retardant and the base oil is from 80 to 100 mass%.

(10) The non-water coolant composition according to any one of (1) to (9) in which a conductivity at 20°C is 0.1 μS/cm or less.

(11) A cooling system that uses the non-water coolant composition according to any one of (1) to (10) as a refrigerant.

(12) The cooling system according to (11) in which the cooling system is for cooling a heat generation apparatus mounted on a vehicle including a travel motor.

(13) The cooling system according to (12) in which the heat generation apparatus is an inverter, a converter, a generator, a motor, or a battery.

(14) The cooling system according to (12) or (13) in which the heat generation apparatus includes a power card. The non-water coolant composition is in physical contact with the power card.

The present disclosure can provide the non-aqueous coolant composition that is excellent in insulation property, cooling capability, and flame resistance.

BRIEF DESCRIPTION OF THE DRAWINGS

FIG. 1 is a schematic perspective view illustrating an exemplary configuration of a semiconductor apparatus used for an inverter of a drive system in a vehicle with travel motor.

DETAILED DESCRIPTION

The embodiment is a non-water coolant composition that contains at least one halogen-based flame retardant

selected from a fluorine-based oil(s) and a chlorinated paraffin(s).

The non-water coolant composition according to the embodiment has excellent insulation property, cooling capability, and flame resistance. Especially, since the non-water coolant composition according to the embodiment has the excellent insulation property and flame resistance, a short circuit or the like can be suppressed. Additionally, the non-water coolant composition according to the embodiment further has excellent cooling capability. Therefore, the non-water coolant composition according to the embodiment can be used in a vehicle with travel motor, such as a hybrid vehicle and an electric vehicle, in some embodiments.

The non-water coolant composition according to the embodiment provides another effect as follows. The halogen-based flame retardant in the embodiment has a low ion elution. Therefore, in the non-water coolant composition according to the embodiment, ions are less likely to elute from, for example, a refrigerant pipe (for example, made of rubber) used in a cooling system, and an increase in conductivity in accordance with a long use is small. Therefore, the non-water coolant composition according to the embodiment can hold the excellent insulation property over a long period of time.

The non-water coolant composition according to the embodiment provides another effect as follows. Conventionally, a generally used ethylene glycol-based aqueous coolant has excellent cooling capability but has a poor insulation property. Therefore, as illustrated in FIG. 1, a component side of a cooling object needed to have an insulation structure. Specifically, as illustrated in FIG. 1, it was necessary to dispose insulating plates (6a and 6b of FIG. 1) to ensure the insulation property between an electronic apparatus and the non-water coolant composition. However, installing the insulating plates degrades heat transfer characteristics between the non-water coolant composition and the electronic apparatus, thus consequently reducing cooling performance of the cooling system. Since the non-water coolant composition according to the embodiment is excellent in insulation property, the installation of the insulating plates can be eliminated, and as a result, the cooling system excellent in cooling performance can be provided.

The non-water coolant composition according to the embodiment provides another effect as follows. As an exemplary means for cooling the electronic apparatus, there has been a method to at least partially (partially or completely) immerse the electronic apparatus in the non-water coolant composition. For example, for the cooling, a power card can be disposed to be in physical contact with the non-water coolant composition. While the cooling structure has an extremely excellent heat transfer efficiency, the non-water coolant composition is required to have the excellent insulation property because the electronic apparatus and the non-water coolant composition are in direct contact. The non-water coolant composition according to the embodiment is excellent in insulation property, non-toxic, and less likely to cause corrosion. Thus, the non-water coolant composition according to the embodiment is usable in the cooling system that has the cooling structure in some embodiments.

The following describes the embodiment in detail.

1. Non-Water Coolant Composition

The non-water coolant composition according to the embodiment is non-aqueous. In the specification, non-aqueous means substantially free of water, "substantially free of water" means that the non-water coolant composition does not contain water in a content range in which expression of the effect of the embodiment is interfered, means that the water content in the non-water coolant composition is 1.0 mass% or less in some embodiments, means that the water content in the non-water coolant composition is 0.5 mass% or less in some embodiments, means that the water content in the non-water coolant composition is 0.1 mass% or less in some embodiments, means that the water content in the non-water coolant composition is 0.01 mass% or less in some embodiments, or means that the water content in the non-water coolant composition is 0 mass% (undetectable) in some embodiments.

The non-water coolant composition according to the embodiment contains at least one halogen-based flame retardant selected from a fluorine-based oil(s) and a chlorinated paraffin(s) as a non-aqueous base. One halogen-based flame retardant may be used alone, or two or more halogen-based flame retardants may be used in combination.

The halogen-based flame retardant (the fluorine-based oil or the chlorinated paraffin) in the embodiment especially has a low conductivity (an excellent insulation property) and a high flash point (an excellent flame resistance). Additionally, since ion elution of the halogen-based flame retardant in the embodiment is low, elution of ions from a refrigerant pipe (for example, made of rubber) or the like can be suppressed. Consequently, the halogen-based flame retardant in the embodiment allows providing an excellent insulation property to the non-water coolant composition over a long period of time.

In some embodiments, a molecular weight of the halogen-based flame retardant is in a range from 100 to 1200, in a range from 150 to 1000, and in a range from 200 to 800. The molecular weight of the halogen-based flame retardant within these ranges allows suppressing an increase in viscosity and obtaining high cooling capability.

As long as the oil comprises fluorine atoms, the fluorine-based oil is not especially limited. The fluorine-based oil is an oil having an electrical insulation property comprising fluorine atoms in some embodiments. Examples of the fluorine-based oil include a chlorotrifluoroethylene low polymer, a perfluoropolyether oil, a perfluoroalkyl ether, a fluorine-modified silicone oil, or the like. Among these, the chlorotrifluoroethylene low polymer is used in some embodiments. One fluorine atom may be used alone or two or more fluorine atoms may be used in combination.

Examples of a commercial product of the fluorine-based oil include "Krytox (registered trademark) GPL102" (manufactured by Chemours Company), "Daifloil (registered trademark) #1," "Daifloil #3," "Daifloil #10," "Daifloil #20," "Daifloil #50," "Daifloil #100," "DEMNUM (registered trademark) S-65" (manufactured by DAIKIN INDUSTRIES, LTD.), and the like.

A ratio of the number of atoms A of fluorine to the number of atoms B of carbon contained in the fluorine-based oil (A/B) is from 1.0 to 2.0 in some embodiments and from 1.5 to 2.0 in some embodiments.

A kinematic viscosity of the fluorine-based oil at 25°C is from 1 $mm^2/s$ to 50 $mm^2/s$ in some embodiments and from 1 $mm^2/s$ to 20 $mm^2/s$ in some embodiments.

An average molecular weight of the fluorine-based oil is, for example, from 100 to 1200, from 200 to 1000 in some embodiments, from 300 to 800 in some embodiments, and from 400 to 600 in some embodiments. The average molecular weight of the fluorine-based oil within these ranges allows suppressing an increase in viscosity and holding high cooling capability.

The chlorotrifluoroethylene low polymer is a polymer of chlorotrifluoroethylene. The chlorotrifluoroethylene low polymer is a compound having a repeating structural unit expressed by the following Formula (1).

[Chem. 1]

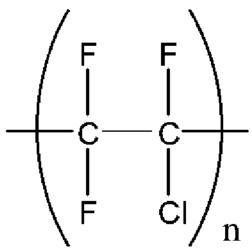

(1)

[In Formula (1), "n" is an integer of 2 or more.]

The average molecular weight of the chlorotrifluoroethylene low polymer is from 100 to 1200 in some embodiments, from 200 to 1000 in some embodiments, from 300 to 800 in some embodiments, and from 400 to 600 in some embodiments.

A kinematic viscosity of the chlorotrifluoroethylene low polymer at 25°C is 50 $mm^2/s$ or less in some embodiments, 40 $mm^2/s$ or less in some embodiments, 30 $mm^2/s$ or less in some embodiments, and 25 $mm^2/s$ or less in some embodiments. The kinematic viscosity of the chlorotrifluoroethylene low polymer at 25°C of 50 $mm^2/s$ or less allows effectively improving the cooling capability of the non-water coolant composition. Note that the kinematic viscosity can be measured in accordance with JIS K2283.

The chlorinated paraffin is a generic term for an organic chlorine compound in which chlorine is bonded to an alkane. The raw materials of the chlorinated paraffin are chlorine and normal paraffin or paraffin wax, and products at various chlorination degrees are provided. The chlorinated paraffin especially has excellent insulation property and flame resistance. Additionally, since ion elution of the chlorinated paraffin is low, elution of ions from a refrigerant pipe (for example, made of rubber) or the like can be suppressed. Consequently, the chlorinated paraffin allows providing an excellent insulation property to the non-water coolant composition over a long period of time.

The chlorinated paraffin has, for example, 10 to 30 carbon atoms. Examples of the chlorinated paraffin include short-chain chlorinated paraffin having 10 to 13 carbon atoms, medium-chain chlorinated paraffin having 14 to 17 carbon atoms, or long-chain chlorinated paraffin having 18 to 30 carbon atoms. Among these, from an aspect of cooling capability, the short-chain chlorinated paraffin having 10 to 13 carbon atoms and the medium-chain chlorinated paraffin having 14 to 17 carbon atoms are used in some embodiments.

An average molecular weight of the chlorinated paraffin is from 100 to 1200 in some embodiments, from 200 to 1000 in some embodiments, from 300 to 800 in some embodiments, and from 400 to 600 in some embodiments. The average molecular weight of the chlorinated paraffin within these ranges allows suppressing an increase in viscosity and obtaining high cooling capability.

Examples of a commercial product of the chlorinated paraffin include "EMPARA (registered trademark) 40," "EMPARA 70," "EMPARA K-45," "EMPARA K-47," "EMPARA K-50," or "EMPARA AR-500" (manufactured by Ajinomoto Fine-Techno Co.,

Inc.), and "Toyoparax (registered trademark) 250," "Toyoparax 265," "Toyoparax 270," "Toyoparax 150," or "Toyoparax A-50" (manufactured by Tosoh Corporation), and the like.

The content of the halogen-based flame retardant in the non-water coolant composition is, for example, 1 mass% or more, 5 mass% or more in some embodiments, 10 mass% or more in some embodiments, 20 mass% or more in some embodiments, and 30 mass% or more in some embodiments. The larger the content of the halogen-based flame retardant is, the more the flame resistance of the non-water coolant composition can be improved. The content of the halogen-based flame retardant in the non-water coolant composition is, for example, 100 mass% or less, 90 mass% or less in some embodiments, 80 mass% or less in some embodiments, and 70 mass% or less in some embodiments.

In addition to the halogen-based flame retardant, the non-water coolant composition comprises at least one base oil selected from a mineral oil(s) and a synthetic oil(s). That is, the non-water coolant composition comprises at least one base oil selected from a mineral oil and a synthetic oil in addition to the halogen-based flame retardant as a non-aqueous base. By comprising these base oils as another non-aqueous base, the excellent insulation property, cooling capability, and flame resistance of the non-water coolant composition can be efficiently achieved. Since the base oil has high compatibility with the halogen-based flame retardant, even when they are mixed, a problem, such as phase separation, is less likely to occur. Therefore, in addition to the above-described advantages, the non-water coolant composition comprising the halogen-based flame retardant and the base oil is a coolant having satisfactory stabilization as a liquid composition. Examples of the mineral oil include a paraffin-based mineral oil, a naphthenic mineral oil, or a mixture of these oils. Examples of the synthetic oil include an ester-based synthetic oil, a synthetic hydrocarbon oil, a silicone oil, a fluorinated oil, or a mixture of these oils. One base oil may be used alone or two or more base oils may be mixed for use.

A kinematic viscosity (40°C) of the base oil is not specifically limited. It is, for example, from 0.5 to 100 $mm^2/s$, from 0.5 to 20 $mm^2/s$ in some embodiments, and from 0.5 to 10 $mm^2/s$ in some embodiments.

The content of the base oil in the non-water coolant composition is 10 mass% or more in some embodiments, 20 mass% or more in some embodiments, and 30 mass% or more in some embodiments.

In the case where the non-water coolant composition contains the halogen-based flame retardant and the base oil, the content of the halogen-based flame retardant in the non-water coolant composition is from 1 to 80 mass% and the content of the base oil in the non-water coolant composition is from 20 to 99 mass% in some embodiments, the content of the halogen-based flame retardant in the non-water coolant composition is from 10 to 80 mass% and the content of the base oil in the non-water coolant composition is from 20 to 90 mass% in some embodiments, and the content of the halogen-based flame retardant in the non-water coolant composition is from 20 to 70 mass% and the content of the base oil in the non-water coolant composition is from 30 to 80 mass% in some embodiments.

In the case where the non-water coolant composition contains the fluorine-based oil and the base oil, the content of the fluorine-based oil in the non-water coolant composition is from 1 to 55 mass% and the content of the base oil in the non-water coolant composition is from 45 to 99 mass% in some embodiments, the content of the fluorine-based oil in the non-water coolant composition is from 10 to 50 mass% and the content of base oil in the non-water coolant composition is from 50 to 90 mass% in some embodiments, and the content of the fluorine-based oil in the non-water coolant composition is from 15 to 45 mass% and the content of the base oil in the non-water coolant composition is from 55 to 85 mass% in some embodiments.

In the case where the non-water coolant composition contains the chlorinated paraffin and the base oil, the content of the chlorinated paraffin in the non-water coolant composition is from 1 to 80 mass% and the content of the base oil in the non-water coolant composition is from 20 to 99 mass% in some embodiments, the content of the chlorinated paraffin in the non-water coolant composition is from 10 to 80 mass% and the content of the base oil in the non-water coolant composition is from 20 to 90 mass% in some embodiments, and the content of the chlorinated paraffin in the non-water coolant composition is from 20 to 70 mass% and the content of the base oil in the non-water coolant composition is from 30 to 80 mass% in some embodiments.

The total content of the halogen-based flame retardant and the base oil in the non-water coolant composition is 80 to 100 mass% or more in some embodiments, 85 mass% or more in some embodiments, 90 mass% or more in some embodiments, 95 mass% or more in some embodiments, 98 mass% or more in some embodiments, or 100 mass% in some embodiments.

In addition to the halogen-based flame retardant and the base oil, the non-water coolant composition may contain or need not to contain at least one other non-aqueous base. The content of the at least one other non-aqueous base in the non-water coolant composition is, for example, from 0.1 to 10 mass%, 5 mass% or less in some embodiments, and 1 mass% or less in some embodiments.

The non-water coolant composition according to the embodiment may contain or need not to contain at least one additive, such as an antioxidant agent, a rust inhibitor, a friction modifier, an anticorrosive, a viscosity index improver, a pour point depressant, a dispersing agent/surfactant, an antiwear agent, or a solid lubricant, in addition to the above-described components. The content of the at least one additive in the non-water coolant composition is, for example, from 0.1 to 20 mass%, and is 10 mass% or less in some embodiments, 5 mass% or less in some embodiments, and 1 mass% or less in some embodiments.

A kinematic viscosity (20°C) of the non-water coolant composition according to the embodiment is, for example, from 0.1 to 100 $mm^2/s$, and is from 0.1 to 10 $mm^2/s$ in some embodiments.

Since the non-water coolant composition is forcibly circulated in the cooling system, the viscosity is lowered in some embodiments. The viscosity of the non-water coolant composition can be adjusted by, for example, a viscosity and an amount of the base oil to be added.

A conductivity (20°C) of the non-water coolant composition according to the embodiment is 0.1 $\mu$S/cm or less in some embodiments, 0.01 $\mu$S/cm or less in some embodiments, and 0.001 $\mu$S/cm or less in some embodiments.

2. Cooling System

The non-water coolant composition according to the embodiment is used for the cooling system, and is used for the cooling system included in a vehicle with travel motor in some embodiments. That is, an aspect of the embodiment is a cooling system where the non-water coolant composition according to the embodiment is used as a refrigerant. An aspect of the embodiment is a cooling system for cooling a heat generation apparatus mounted on a vehicle with travel motor. An aspect of the embodiment is a vehicle with travel motor that includes the cooling system according to the embodiment and the heat generation apparatus cooled by the cooling system.

The "vehicle with travel motor" in the specification includes both an electric vehicle and a hybrid vehicle. The electric vehicle includes only a travel motor as a power source without an engine. The hybrid vehicle includes both the travel motor and the engine as the power source. A fuel cell vehicle is also included in the "vehicle with travel motor."

As one of measures against environmental problems, the vehicle with travel motor, such as the hybrid vehicle, the fuel cell vehicle, and the electric vehicle, that travels by a driving force of the motor has attracted attention. In this type of vehicle, since the heat generation apparatus, such as a motor, a generator, an inverter, a converter, and a battery, generates a heat to have a high temperature, the heat generation apparatus needs to be cooled. As described above, the non-water coolant composition according to the embodiment has excellent insulation property, cooling capability, and flame resistance. Therefore, a short circuit or the like is less likely to occur and the non-water coolant composition according to the embodiment is excellent in cooling capability. Therefore, the non-water coolant composition according to the embodiment is usable for the cooling system of the vehicle with travel motor in some embodiments.

The cooling system includes, for example, a refrigerant pipe through which the non-water coolant composition as a refrigerant flows, a reservoir tank that houses the non-water coolant composition, a circulation device for circulating the non-water coolant composition in a circulation passage, or a cooling device for decreasing the temperature of the non-water coolant composition. The circulation device includes, for example, an electric pump. The cooling device includes, for example, a radiator, a chiller, or an oil cooler. A cooling object for the cooling system is the heat generation apparatus, such as the inverter, the converter, the generator, the motor, or the battery.

The configuration of the cooling system is not specifically limited. The cooling system includes, for example, the refrigerant pipe, the reservoir tank, the electric pump, the radiator, and a cooling unit included in the heat generation apparatus. The cooling unit is a part to receive a heat from the heat generation apparatus, and, for example, the cooler 3 of FIG. 1 corresponds to the cooling unit. For example, after the non-water coolant composition is pumped up from the reservoir tank by the electric pump, the non-water coolant composition cools the heat generation apparatus at the cooling unit, and subsequently, the non-water coolant composition is returned to the reservoir tank via the radiator on a downstream side. Since the temperature of the non-water coolant composition that has cooled the cooling unit rises, the temperature of the non-water coolant composition that has risen in temperature is decreased by the radiator. A configuration where the oil cooler is disposed on the way of the refrigerant pipe to cool the motor by this oil cooler can be employed.

The cooling system according to the embodiment is used for the vehicle with travel motor in some embodiments. That is, an aspect of the embodiment is a vehicle with travel motor that includes the cooling system according to the embodiment. An aspect of the embodiment is an electric vehicle, a hybrid vehicle, or a fuel cell vehicle that includes the cooling system according to the embodiment.

As described above, the non-water coolant composition according to the embodiment is extremely excellent in insulation property, non-toxic, and less likely to cause corrosion. Thus, the non-water coolant composition according to the embodiment is usable for the cooling system that has a cooling structure where the electronic apparatus is at least partially (partially or completely) immersed in the non-water coolant composition in some embodiments. The electronic apparatus includes, for example, a power card and a CPU, which include semiconductor devices. Specific configurations of this cooling system can be found in, for example, U. S. Patent No. 7,403,392 or US Patent Application Publication No. 2011-0132579 A. Specifically, an aspect of the embodiment is the vehicle with travel motor where the heat generation apparatus includes the power card, and the non-water coolant composition is in physical contact with the power card.

[Examples]

While the following describes the embodiment with examples, the present disclosure is not limited to the examples.

<Materials>

- Chlorotrifluoroethylene low polymer (Daifloil #1 manufactured by DAIKIN INDUSTRIES, LTD., the average molecular weight: 500)
- Chlorinated paraffin (EMPARA K-50 manufactured by Ajinomoto Fine-Techno Co., Inc.)
- Mineral oil: kinematic viscosity (20°C): 0.1 to 10 $mm^2/s$
- Conventional LLC (Toyota genuine, product name: Super Long-Life Coolant, containing ethylene glycol and additive)
- Ethylene glycol (manufactured by Tokyo Chemical Industry Co., Ltd.) (hereinafter also referred to as EG)
- Ion exchanged water

<Preparation Method>

The respective materials were mixed with the compositions described in the following Table 1 and Table 2 to prepare non-water coolant compositions.

<Conductivity>

The conductivities of the respective non-water coolant compositions at 20°C were measured using a conductivity measuring machine (manufactured by Yokogawa Electric Corporation, SC72 Personal Handheld Conductivity Meter, sensor: SC72SN-11). Table 1 and Table 2 show the results.

<Cooling Capability>

Regarding the cooling capabilities of the respective non-water coolant compositions, cooling performance in a radiator using each non-water coolant composition as a refrigerant was calculated with the formula below. Table 1 and Table 2 show the results.

The refrigerants were adjusted to have inlet temperatures at 65°C. Other conditions were as follows. Ventilation volume to radiator: 4.5 m/sec, refrigerant flow rate: 10 L/min, temperature difference between refrigerant and external air: 40°C (refrigerant: 65°C, external air: 25°C).

[Math. 1]

$$Q_w = \frac{V_w \cdot \gamma_w \cdot 10^{-3}}{60} \cdot C_{pw} \cdot (t_{w1} - t_{w2})$$

Qw: cooling performance, $V_w$: refrigerant flow rate, $\gamma_W$: refrigerant density, $C_{PW}$: refrigerant specific heat, $t_{W1}$: refrigerant inlet temperature, $t_{W2}$: refrigerant outlet temperature

<Flame Resistance>

A flash point of each non-water coolant composition was measured compliant with ASTM D93, and the flame resistance was evaluated based on the following criteria.

A: 150°C or more

B: 140°C or more and less than 150°C

C: less than 140°C

Table 1 and Table 2 show the results. Since the flash points are absent in Comparative Examples 1 to 3, Table 1 and 2 indicate them as"-."

[Table 1]

| | Component | Example 1 | Example 2 | Example 3 | Example 4 | Example 5 |
|---|---|---|---|---|---|---|
| Composition (Mass%) | Chlorotrifluoroethylene Low Polymer | 10 | 30 | 50 | - | - |
| | Chlorinated Paraffin | - | - | - | 20 | 70 |
| | Mineral Oil | 90 | 70 | 50 | 80 | 30 |
| | Conventional LLC (EG + Additive) | - | - | - | - | - |
| | Ethylene Glycol | - | - | - | - | - |
| | Ion Exchanged Water | - | - | - | - | - |
| Sum | | 100 | 100 | 100 | 100 | 100 |
| Evaluation | Conductivity (μS/cm) | <0.0009 | <0.0009 | <0.0009 | <0.0009 | <0.0009 |
| | Cooling Performance (W/K) | 197 | 194 | 190 | 198 | 192 |
| | Flash Point (°C) | 141 B | 146 B | 163 A | 141 B | 150 A |

[Table 2]

| | Component | Comparative Example 1 | Comparative Example 2 | Comparative Example 3 | Comparative Example 4 |
|---|---|---|---|---|---|
| Composition (Mass%) | Chlorotrifluoroethylene Low Polymer | - | - | - | - |
| | Chlorinated Paraffin | - | - | - | - |
| | Mineral Oil | - | - | - | 100 |
| | Conventional LLC (EG + Additive) | 50 | - | - | - |
| | Ethylene Glycol | - | 50 | - | - |
| | Ion Exchanged Water | 50 | 50 | 100 | - |
| Sum | | 100 | 100 | 100 | 100 |
| Evaluation | Conductivity (μS/cm) | 7000 | 0.6 | 0.3 | <0.0009 |
| | Cooling Performance (W/K) | 371 | 368 | 458 | 200 |
| | Flash Point (°C) | - | - | - | 139 C |

The non-water coolant compositions in all the Examples had conductivities of less than 0.0009 μS/cm, and therefore were excellent in insulation property. The cooling performances of the radiators using the non-water coolant compositions of all the Examples were 190 W/K or more, and the non-water coolant compositions of all the Examples had sufficient cooling capabilities for practical use. The non-water coolant compositions of all the Examples had the

flash points higher than that of the mineral oil (Comparative Example 4) and had the improved flash points. Especially, as the content of the halogen-based flame retardant increased, the flame resistance was improved. On the other hand, Comparative Examples 1 to 3 having the structures of the conventional non-water coolant compositions (the mixture of ethylene glycol and water or water alone) had the high conductivities and the insufficient insulation properties.

The above-described results have proved that the non-water coolant composition according to the embodiment has the excellent insulation property, cooling capability, and flame resistance.

Terms used in the specification should be understood as used with meanings usually used in the technical field unless otherwise stated. Accordingly, unless otherwise defined differently, all the technical terms and the science and technology terms used in the specification have the same meanings as terms generally understood by a person skilled in the art pertaining to the present disclosure. In the case of inconsistency, the specification (including definition) has priority.

It should be understood that throughout the entire description, the expression as a singular form also includes a concept of its plural form unless otherwise stated. Accordingly, articles of a singular form (for example, in the case of English, "a," "an," and "the") should be understood as including the concept of its plural form unless otherwise stated.

Upper limit values and/or lower limit values of respective numerical ranges described in the Specification can be appropriately combined to specify an intended range. For example, upper limit values and lower limit values of the numerical ranges can be appropriately combined to specify an intended range, upper limit values of the numerical ranges can be appropriately combined to specify an intended range, and lower limit values of the numerical ranges can be appropriately combined to specify an intended range.

DESCRIPTION OF SYMBOLS

| | |
|---|---|
| 2 | Semiconductor apparatus |
| 3 | Cooler |
| 4a | Refrigerant supply pipe |
| 4b | Refrigerant discharge pipe |
| 5a, 5b | Coupling pipe |
| 6a, 6b | Insulating plate |
| 10 | Power card |
| 31 | Case |

## Claims

**1.** A non-water coolant composition comprising

at least one halogen-based flame retardant selected from a fluorine-based oil and a chlorinated paraffin, **characterised by** further comprising at least one base oil selected from a mineral oil and a synthetic oil.

**2.** The non-water coolant composition according to claim 1,
wherein the halogen-based flame retardant comprises the fluorine-based oil.

**3.** The non-water coolant composition according to claim 1 or 2,
wherein the fluorine-based oil comprises a chlorotrifluoroethylene low polymer.

**4.** The non-water coolant composition according to claim 1,
wherein the halogen-based flame retardant comprises the chlorinated paraffin.

**5.** The non-water coolant composition according to claim 4,
wherein the chlorinated paraffin has 10 to 30 carbon atoms.

**6.** The non-water coolant composition according to claim 1,

wherein the halogen-based flame retardant has a content of 1 to 80 mass%, and
wherein the base oil has a content of 20 to 99 mass%.

**7.** The non-water coolant composition according to claim 1,

wherein the halogen-based flame retardant comprises the fluorine-based oil,
wherein the halogen-based flame retardant has a content of 1 to 55 mass%, and
wherein the base oil has a content of 45 to 99 mass%.

**8.** The non-water coolant composition according to claim 1,

wherein the halogen-based flame retardant comprises the chlorinated paraffin,
wherein the halogen-based flame retardant has a content of 1 to 80 mass%, and
wherein the base oil has a content of 20 to 99 mass%.

**9.** The non-water coolant composition according to any one of claims 6-8,
wherein a total content of the halogen-based flame retardant and the base oil is from 80 to 100 mass%.

**10.** The non-water coolant composition according to any one of claims 1-9,
wherein a conductivity at 20°C is 0.1 μS/cm or less.

**11.** A cooling system, comprising the non-water coolant composition according to any one of claims 1-10 as a refrigerant.

**12.** The cooling system according to claim 11,
wherein the cooling system is for cooling a heat generation apparatus mounted on a vehicle including a travel motor.

**13.** The cooling system according to claim 12,
wherein the heat generation apparatus is an inverter, a converter, a generator, a motor, or a battery.

**14.** The cooling system according to claim 12 or 13,
wherein the heat generation apparatus includes a power card (10), and the non-water coolant composition is in physical contact with the power card (10).

**Patentansprüche**

**1.** Nicht-wasserbasierte Kühlmittelzusammensetzung, umfassend:

mindestens ein halogenbasiertes Flammschutzmittel, ausgewählt aus einem Öl auf Fluorbasis und einem chlorierten Paraffin,
**dadurch gekennzeichnet, dass** sie ferner mindestens ein Grundöl umfasst, ausgewählt aus einem Mineralöl und einem synthetischen Öl.

**2.** Nicht-wasserbasierte Kühlmittelzusammensetzung nach Anspruch 1,
wobei das halogenbasierte Flammschutzmittel das Öl auf Fluorbasis umfasst.

**3.** Nicht-wasserbasierte Kühlmittelzusammensetzung nach Anspruch 1 oder 2,
wobei das Öl auf Fluorbasis ein Polymer mit geringem Chlortrifluorethylen umfasst.

**4.** Nicht-wasserbasierte Kühlmittelzusammensetzung nach Anspruch 1,
wobei das halogenbasierte Flammschutzmittel das chlorierte Paraffin umfasst.

**5.** Nicht-wasserbasierte Kühlmittelzusammensetzung nach Anspruch 4,
wobei das chlorierte Paraffin 10 bis 30 Kohlenstoffatome hat.

**6.** Nicht-wasserbasierte Kühlmittelzusammensetzung nach Anspruch 1,

wobei das halogenbasierte Flammschutzmittel einen Gehalt von 1 bis 80 Masse-% hat, und
wobei das Grundöl einen Gehalt von 20 bis 99 Masse-% hat.

**7.** Nicht-wasserbasierte Kühlmittelzusammensetzung nach Anspruch 1,

wobei das halogenbasierte Flammschutzmittel das Öl auf Fluorbasis umfasst,
wobei das halogenbasierte Flammschutzmittel einen Gehalt von 1 bis 55 Masse-% hat, und
wobei das Grundöl einen Gehalt von 45 bis 99 Masse-% hat.

**8.** Nicht-wasserbasierte Kühlmittelzusammensetzung nach Anspruch 1,

wobei das halogenbasierte Flammschutzmittel chloriertes Paraffin umfasst,
wobei das halogenbasierte Flammschutzmittel einen Gehalt von 1 bis 80 Masse-% hat, und
wobei das Grundöl einen Gehalt von 20 bis 99 Masse-% hat.

**9.** Nicht-wasserbasierte Kühlmittelzusammensetzung nach einem der Ansprüche 6-8,
wobei ein Gesamtgehalt des halogenbasierten Flammschutzmitteln und des Grundöls von 80 bis 100 Masse-% ist.

**10.** Nicht-wasserbasierte Kühlmittelzusammensetzung nach einem der Ansprüche 1-9, wobei eine Leitfähigkeit bei 20 °C 0,1 μS/cm oder weniger ist.

**11.** Kühlsystem, umfassend die nicht-wasserbasierte Kühlmittelzusammensetzung nach einem der Ansprüche 1-10 als ein Kältemittel.

**12.** Kühlsystem nach Anspruch 11,
wobei das Kühlsystem zum Kühlen einer Wärmeerzeugungsvorrichtung dient, die an einem Fahrzeug montiert ist, das einen Fahrmotor beinhaltet.

**13.** Kühlsystem nach Anspruch 12,
wobei die Wärmeerzeugungsvorrichtung ein Inverter, ein Konverter, ein Generator, ein Motor oder eine Batterie ist.

**14.** Kühlsystem nach Anspruch 12 oder 13,
wobei die Wärmeerzeugungsvorrichtung eine Leistungskarte (10) beinhaltet, und die nicht-wasserbasierte Kühlmittelzusammensetzung in physischem Kontakt mit der Leistungskarte (10) ist.

## Revendications

**1.** Composition de refroidissement non aqueuse, comprenant

au moins un ignifuge à base d'halogène sélectionné parmi une huile à base de fluor et une paraffine chlorée,
**caractérisée en ce qu'**elle comprend en outre au moins une huile de base sélectionnée parmi une huile minérale et une huile synthétique.

**2.** Composition de refroidissement non aqueuse selon la revendication 1,
dans laquelle l'ignifuge à base d'halogène comprend l'huile à base de fluor.

**3.** Composition de refroidissement non aqueuse selon la revendication 1 ou 2,
dans laquelle l'huile à base de fluor comprend un polymère à faible teneur en chlorotrifluoroéthylène.

**4.** Composition de refroidissement non aqueuse selon la revendication 1,
dans laquelle l'ignifuge à base d'halogène comprend la paraffine chlorée.

**5.** Composition de refroidissement non aqueuse selon la revendication 4,
dans laquelle la paraffine chlorée a 10 à 30 atomes de carbone.

**6.** Composition de refroidissement non aqueuse selon la revendication 1,

dans laquelle l'ignifuge à base d'halogène a une teneur de 1 à 80 % massique, et
dans laquelle l'huile de base a une teneur de 20 à 99 % massique.

**7.** Composition de refroidissement non aqueuse selon la revendication 1,

dans laquelle l'ignifuge à base d'halogène comprend l'huile à base de fluor,
dans laquelle l'ignifuge à base d'halogène a une teneur de 1 à 55 % massique, et
dans laquelle l'huile de base a une teneur de 45 à 99 % massique.

**8.** Composition de refroidissement non aqueuse selon la revendication 1,

dans laquelle l'ignifuge à base d'halogène comprend la paraffine chlorée,
dans laquelle l'ignifuge à base d'halogène a une teneur de 1 à 80 % massique, et
dans laquelle l'huile de base a une teneur de 20 à 99 % massique.

**9.** Composition de refroidissement non aqueuse selon l'une quelconque des revendications 6 à 8, dans laquelle une teneur totale en l'ignifuge à base d'halogène et l'huile de base est de 80 à 100 % massique.

**10.** Composition de refroidissement non aqueuse selon l'une quelconque des revendications 1 à 9, dans laquelle une conductivité à 20 °C est 0,1 μS/cm ou moins.

**11.** Système de refroidissement, comprenant la composition de refroidissement non aqueuse selon l'une quelconque des revendications 1 à 10 en tant que réfrigérant.

**12.** Système de refroidissement selon la revendication 11, dans lequel le système de refroidissement est destiné à refroidir un appareil générateur de chaleur monté sur un véhicule incluant un moteur de déplacement.

**13.** Système de refroidissement selon la revendication 12, dans lequel l'appareil générateur de chaleur est un onduleur, un convertisseur, un générateur, un moteur, ou une batterie.

**14.** Système de refroidissement selon la revendication 12 ou 13, dans lequel l'appareil générateur de chaleur inclut une carte de puissance (10), et la composition de refroidissement non aqueuse est en contact physique avec la carte de puissance (10).

Fig. 1

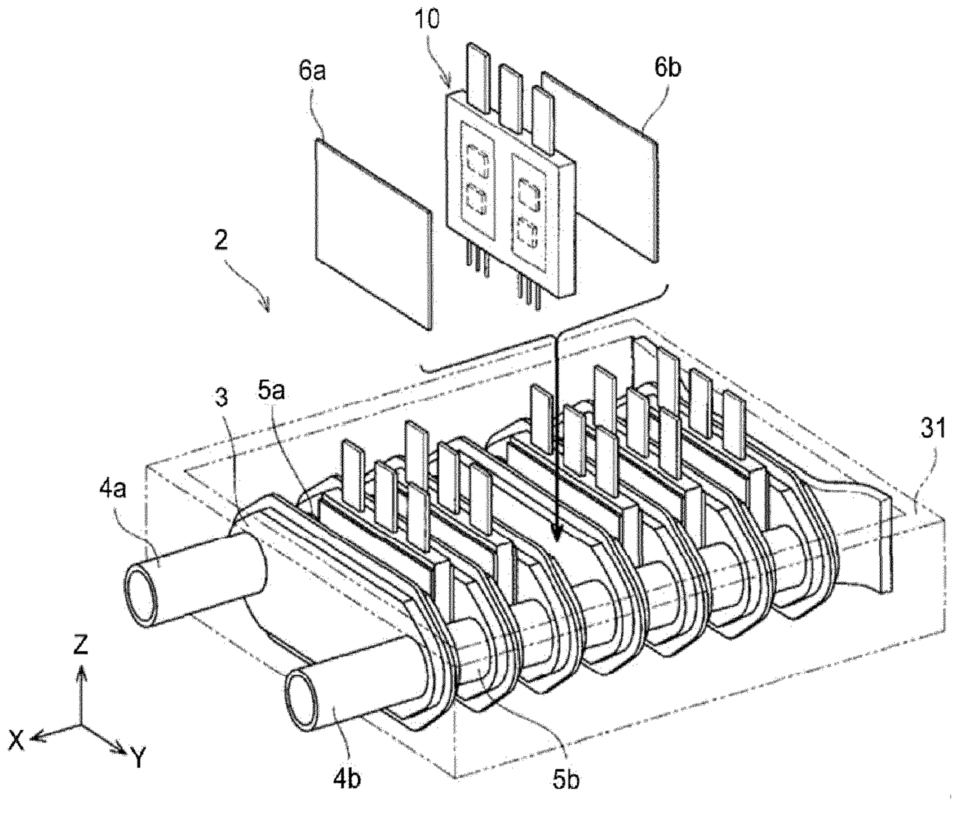

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017017228 A
- JP 2020026471 A
- US 2013168049 A
- US 6148634 A
- US 2005127322 A
- CN 107346866
- US 2011232871 A
- WO 2020011889 A
- US 7403392 B
- US 20110132579 A